# EUROPEAN PATENT APPLICATION

(11) **EP 1 095 856 A2**
(43) Date of publication of application: **02.05.2001**
(21) Application number: 00123216.4
(22) Date of filing: 26.10.2000
(51) Int. Cl.: B65B 9/20, B65B 35/40, B65G 47/82

(54) **Multipack type horizontal packaging machine**

(30) Priority: 27.10.1999 IT VR990088
(71) Applicant: P.F.M. S.p.A., 36036 Torrebelvicino (Vicenza) (IT)
(72) Inventor: Fioravanti, Paolo, 360036 Torrebelvicino (VI) (IT)
(74) Representative: Petraz, Gilberto

(57) **Abstract**

A multipack type packaging machine (10), designed to produce flexible film packs around groups of products (50, 51, 52) arranged in an orderly fashion on a surface, comprises a forming tube (14) inside which the said groups of products transit, and around which a flexible film (17) is wound to form a pack around a group of products, first means (15, 16) to unwind the said flexible film (17) and wind it around the said forming tube (14), second means (18) to carry out a longitudinal seal of the edges of the said flexible film (17), third means (20, 21) to transfer the pack being formed towards a transverse sealing and cutting unit (19) to form the ends of the pack and separate two adjacent packs one from the other. Said second means (18) are positioned above the surface of the said forming tube (14) in such a way that they do not exercise any mechanical or thermal action on the products which are inside the forming tube (14); moreover, the third means (20, 21) are positioned near the end of the forming tube (14) and work in association with the walls of the latter to transfer the film (17) towards the said sealing unit without exercising any mechanical action on the products contained inside the forming tube (14); finally, the machine comprises a conveyor (22) designed to carry away the newly formed pack, the loading end of the said conveyor (2) being close to and downstream of the said transverse sealing and cutting unit (19).

## Description

### TECHNICAL FIELD

This invention refers to a multipack type horizontal packaging machine.

More specifically, this invention refers to a machine that can simultaneously package a number of packs in a single pack, compressing them so that the pack is as small as possible, the packaging of the said packs taking place on an essentially horizontal surface.

The invention is mainly intended for the packaging machine construction industry.

### BACKGROUND ART

Packaging machines capable of forming packs around groups of articles of various kinds, already individually packaged, are already known.

This is the case, for example, of packaging machines of the type normally known as "multipack", which prepare packs which contain, for example, a number of bags of potato crisps or snacks of various kinds.

A machine of this known type consists of a tubular shaped casing, normally known as a "former", around which a film of synthetic material is wound to form the pack, and sealing means to join the longitudinal and cross edges of the film to close the pack.

The said tubular casing is mounted on an oscillating frame between a first horizontal position, in which the products are loaded inside the tube, and a second vertical position, in which the actual pack is formed.

This is essentially a vertical type packaging machine, which is however equipped with loading means that move horizontally, this being the opposite to what normally occurs in vertical packaging machines, in which the products are gravity-fed into the forming tube from a hopper positioned above the forming tube.

This machine has a series of drawbacks and disadvantages which limit its use and which do not make it suitable for the efficient packaging of products such as potato crisps or snacks.

In fact, although the products are fed into the forming tube in an orderly way, such as from a horizontal conveyor, they slide around inside the forming tube in a disorderly fashion during the 90° rotation phase when the forming tube is tilted to the vertical position, thus being scattered inside the pack which is formed, without making full use of the space available.

The result is that voluminous packs are formed which are difficult to insert in the cases designed for their transport; very large cases are therefore necessary although their internal volume is not fully exploited.

Another problem of the packs produced by this type of machine derives from the vertical type nature of the machine itself: the packs produced by packaging machines of this kind are invariably cushion-shaped with two horizontal seals at the upper and lower ends, and a vertical seal which joins the edges of the film between the aforesaid ends.

In the specific case in which the pack must contain a number of smaller packs, and arranged loosely, these cushion-shaped packs cannot be provided with an adequate support base for their subsequent positioning on the shelves of a sales outlet such as a supermarket.

The packs do not therefore have an orderly and attractive shape that encourages consumer purchasing.

Document DE-U-1929956 describes a packaging machine of the type described above, also equipped with a forming tube which allows the products to be loaded horizontally, and which is then turned to make the pack.

In this case, the rotation angle, albeit important, is less than 90°.

This type of machine presents the same drawbacks and limitations in use as the previously described machine.

Document DE-U-1915044 describes a horizontal type packaging machine which can pack loose and long products, for example spaghetti.

In this case the products are first pushed by a piston inside the forming tube, at the exit of which are a pair of rollers above and below the pack being formed and which carry it to a station where a first transverse seal of the pack is carried out.

The pack, closed on one side, is then gripped by a second pair of rollers and carried towards a plate which ends in a chute for discharge of the pack; during the transfer by the second pair of rollers the second transverse seal of the pack is carried out.

This machine too has drawbacks and disadvantages that make it unsuitable for the packaging of a number of packs, arranged next to each other both longitudinally and transversally inside the forming tube, and this is especially the case if the aforesaid packs contain particularly crumbly items such as potato crisps, biscuits or snacks in general.

The machine as per the aforesaid document is in fact equipped with two pairs of transfer rollers which, in order to carry out their function, must exert considerable pressure on the infed pack, and thus on the product, which may be acceptable in the case of sufficiently rigid products, such as spaghetti type pasta, but is totally unacceptable if the packs contain very crumbly products.

It should also be noted that the longitudinal closure of the pack is carried out, in the case of the German patent, by means of a relatively high temperature sealing block, which also acts directly on the product, downstream of the forming tube exit, and with a certain pressure.

Once again this is not an acceptable situation if the products to be packaged consist of individually packaged packs, since in addition to exercising an undoubted degree of pressure on the products (which crumble if friable), there is a risk that the sealing block may seal the wrapping film onto the film that wraps the individual packs or, even worse, melt a part of the wrapping of some packs that are directly beneath the block itself.

### DESCRIPTION OF THE INVENTION

The aim of this invention is to overcome the typical drawbacks and disadvantages of the known background art and to provide therefore a completely horizontal multipack type packaging machine that is able to package a number of packs to form a pack with a compact square base, with limited overall dimensions and suitable for easy boxing and transport.

This is achieved by means of a packaging machine with the features described in the main claim.

The dependent claims describe particularly advantageous embodiments of the packaging machine as per this invention.

The horizontal multipack type packaging machine as per this invention comprises a casing or forming tube inside which, by means of appropriate moving means, a number of packs are transferred, said packs being arranged in compact orderly rows in order to form a single pack with minimum overall dimensions.

In accordance with a first feature of the invention, the discharge end of the forming tube is positioned immediately upstream the device for the transverse sealing of the base of the pack.

The longitudinal heat-sealing device which joins the edges of the packaging film operates on the surface of the forming tube, the walls of which form a rigid barrier which prevents the sealing block from exercising undue pressure of the packs fed into the forming tube

This therefore prevents the risk of product crumbling and the melting of the wrapping film of the individual products in the forming tube.

In accordance with another feature of the invention, the packaging machine is equipped with a transfer device for the packs being formed, preferably consisting of a pair of transfer belts facing each other, which act on the packaging film in correspondence with the end section of the forming tube.

These belts do not exercise any pressure on the products contained inside the individual packs fed into the forming tube, thus also in this case avoiding any risk of crumbling when the products consist of potato crisps, biscuits or snacks of various kinds.

These belts can preferably be used in association with a suction device, which draws the packaging film against the surface of the belt in order to avoid any undue pressure on the product packs present in the forming tube.

The said belts can also be replaced with a series of rubber rollers which carry the packs being formed towards the transverse sealing device.

In accordance with another feature of the invention, immediately downstream of the device for sealing the base of the pack is a conveyor which takes the pack exiting from the forming tube as soon as its base has been sealed, avoiding the use of transfer rollers of the type indicated in the document DE-U-1915044 which would cause serious damage to products of a friable nature.

In accordance with a particularly advantageous embodiment of the invention, the multipack type packaging machine is equipped with a product loading unit, consisting of a conveyor belt on which the groups of packs to be packaged are manually or automatically positioned, and of pushing means able to transfer each group from the conveyor belt and to insert it in the forming tube of the packaging machine, as far as the device for the transverse sealing of the base of the pack.

In accordance with an interesting feature of the invention, the aforesaid conveyor belt is equipped with a series of dividers arranged at right angles to the infeed direction, which allow precise and perfect positioning of the groups of products, and with a device for raising and lowering the section of the conveyor belt positioned in correspondence with the infeed end of the forming tube.

This makes it possible, during the transfer of a group of products inside the forming tube and the formation of the packaging around the said group, to prepare a new group of products on the conveyor belt, aligned along an axis parallel to the axis of the forming tube, albeit at a certain distance from the latter.

When the pushing means exit from the forming tube and leave the conveyor belt area free, the raising device is activated, bringing a new group of products into line with the infeed end of the forming tube, and a new packaging operation begins.

### DESCRIPTION OF THE DRAWINGS

Other features and advantages of the invention will become evident on reading the following description of one embodiment of the invention, given as a non-binding example, with the help of the enclosed drawings, in which:
- fig. 1: shows a schematic side view of a multipack packaging machine according to this invention;
- fig. 2: shows a schematic front view of the machine according to figure 1;
- fig. 3: shows a schematic plan view of the machine according to fig. 1;
- figs. 4 to 9: show various subsequent phases of the loading of a group of products inside the forming tube of a multipack packaging machine according to this invention.

### DESCRIPTION OF ONE EMBODIMENT

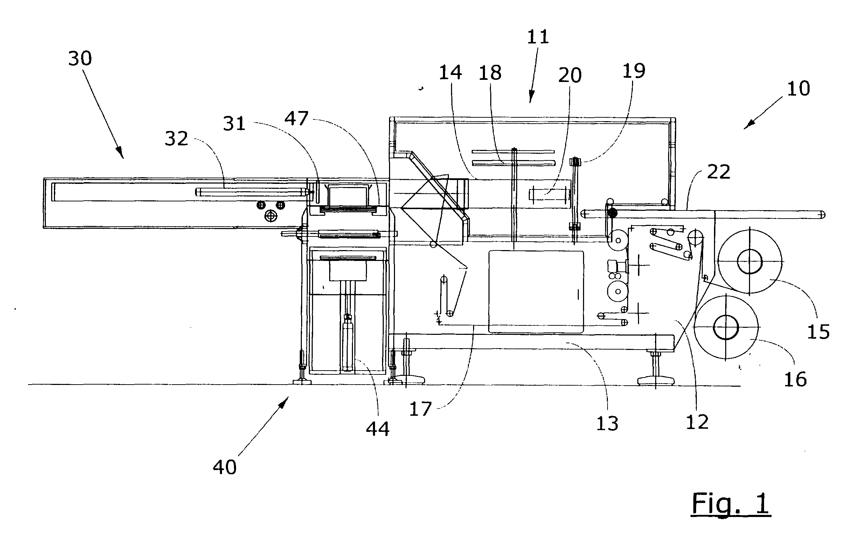

In figures 1 to 3, a packaging machine 10 for groups of products comprises a first packaging unit 11 in the strict sense of the word, enclosed in a casing 12 mounted on a frame 13.

The said packaging unit comprises a forming tube 14 already known, and a pair of drums 15, 16 on which the packaging films 17 are wound which, in a way already known in the background art, are unwound from one or the other of the said drums and wound around the forming tube 14.

The packaging unit also comprises a device 18 for the longitudinal heatsealing of the edges of the film 17.

This already known device comprises heated blocks which are placed in contact with the overlapped edges of the film 17 while it is being wound around the walls of the forming tube 14, to form a seal parallel to the pack infeed direction.

The unit 11 is also equipped with a device which carries the film 17 towards the device 19 for the transverse sealing and cutting of the film 17 to form the respective upper and lower ends of the pack; this device 19 generally comprises a pair of juxtaposed heated blocks, and a blade which cuts the film 17 in correspondence with the sealing zone.

In accordance with this invention, this device 19 is positioned downstream of the discharge end of the forming tube 14.

The unit 11 also comprises a device which carries the film 17 towards the device 19 tor the transverse sealing and cutting of the film.

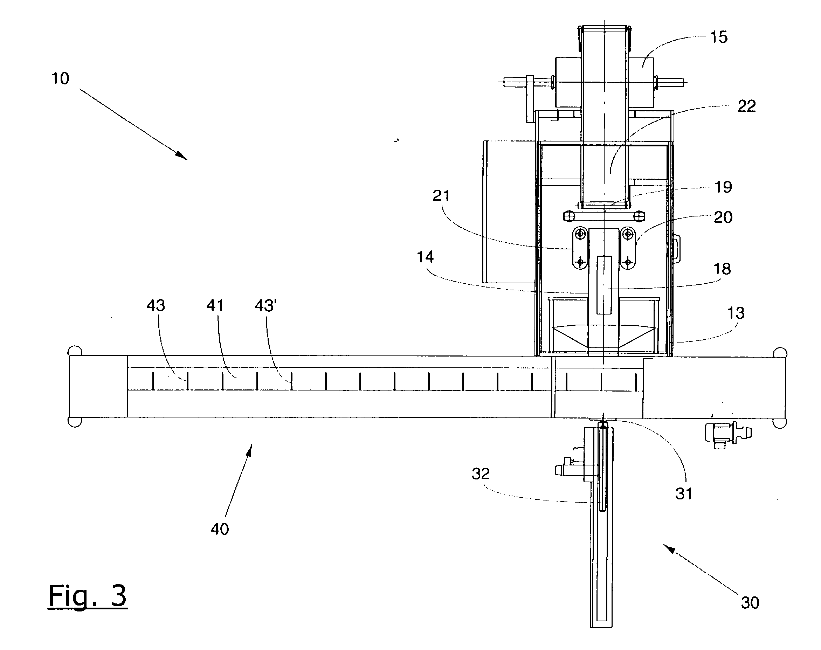

This transfer device comprises a pair of belts 20, 21 (see fig. 3) facing each other on either side of the forming tube 14, which rest against the walls of the tube and transfer the pack being formed towards the transverse sealing and cutting device 19.

Finally, the packaging unit 11 comprises a conveyor 22, one end of which is immediately downstream of the transverse sealing and cutting device 19.

According to this embodiment, the packaging machine 10 comprises a second unit 30 for product transfer inside the forming tube 14.

This second unit 30 essentially comprises a piston 31 the pushing surface of which is aligned with respect to the axis of the forming tube 14.

The said piston 31 moves in a straight line thanks to appropriate means, for example by means of an electric motor and a gear motor which act on the piston shaft 32, between a first position in which it does not enter the working area of a third product transfer unit 40 (which will be described in greater detail below) and a second position in which the pushing surface of the piston is in correspondence with the said device 19 for the transverse sealing and cutting of the film 17.

The greater part of the stroke of the piston 31 takes place inside the forming tube 14.

The said third product transfer unit 40 of the packaging machine 10 essentially consists of a straight conveyor belt 41, mounted on a frame 42.

In accordance with a feature of the invention, the said conveyor belt 41 is equipped with a series of dividers 43, 43'... arranged at right angles with respect to the direction of movement of the said conveyor belt.

The object of these dividers 43, 43' ... is to form circumscribed areas for the insertion and perfect positioning of groups of otherwise loose products, such as bags of potato crisps, snacks, etc., which are manually or automatically placed inside the circumscribed area between two dividers 43, 43', and the side walls of the conveyor 40, so as to form a series of compact groups ready to be packaged together.

According to a particularly advantageous embodiment of the invention, in the area of product transfer towards the forming tube 14 of the packaging unit 11, the conveyor belt 41 operates in association with a device 44 which raises and lowers the belt 41.

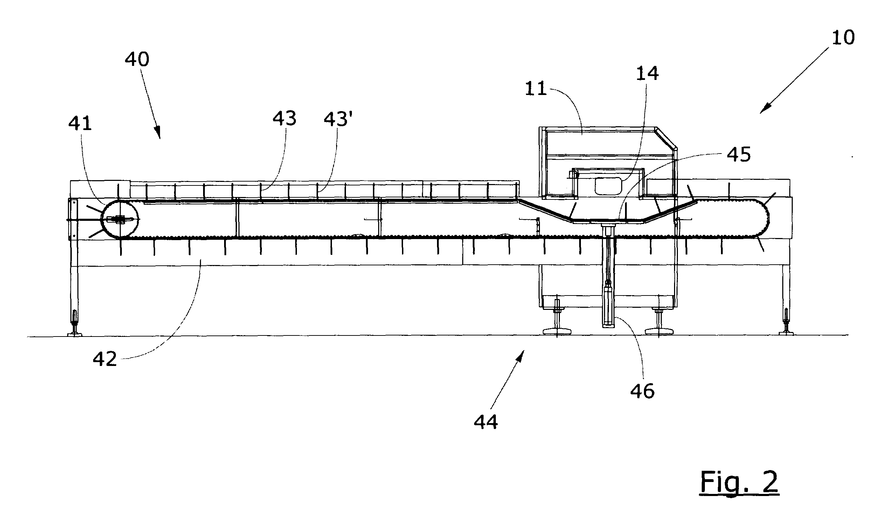

This device 44, which essentially consists of a carriage 45 (see fig. 2) moving on vertical guides 46 and of means 47 (see fig. 1) which grip the belt 41, makes it possible to lower the belt 41 during the transfer of a group of products from the belt 41 towards the forming tube, carried out by the piston 31, in such a way that the dividers 43, 43' cannot interfere with the forward and return movement of the piston 31.

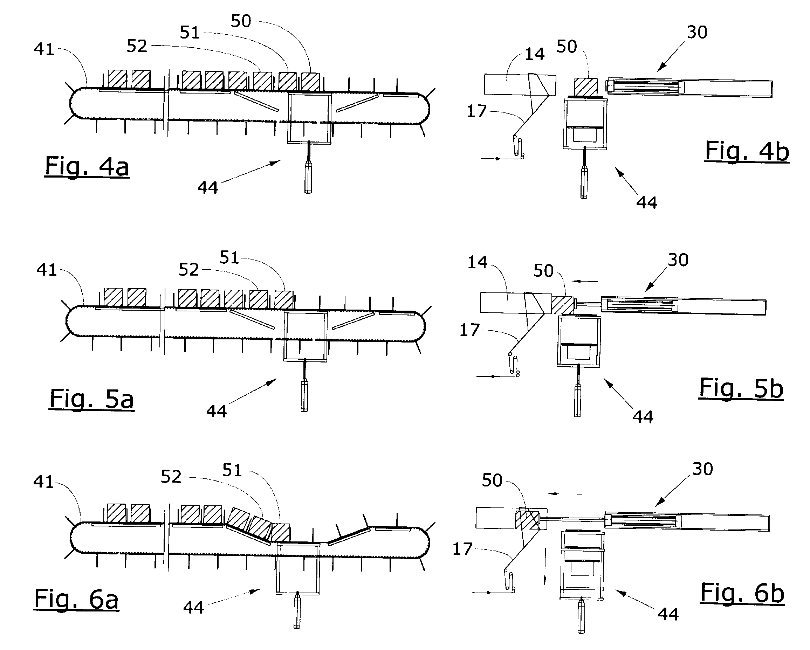

With reference to the subsequent figures 4 to 9, a functioning procedure of the packaging machine 10 as per this invention will now be described.

In figures 4 to 9 the respective suffixes "a" show side views of the conveyor belt 41, while the suffixes "b" show front views of the conveyor belt 41.

In figure 4a, a series of groups of packs 50, 51, 52 ... are positioned on the conveyor belt 41 manually or by means of a robot, and move forward on the conveyor belt with intermittent motion towards the raising and lifting device 44 of the belt 41.

In the position shown in figures 4a and 4b, the group of packs 50 is positioned above the device 44, which is in the raised position; the group 50 is therefore aligned with the longitudinal axis of the forming tube 14 and with the shaft of the piston 30.

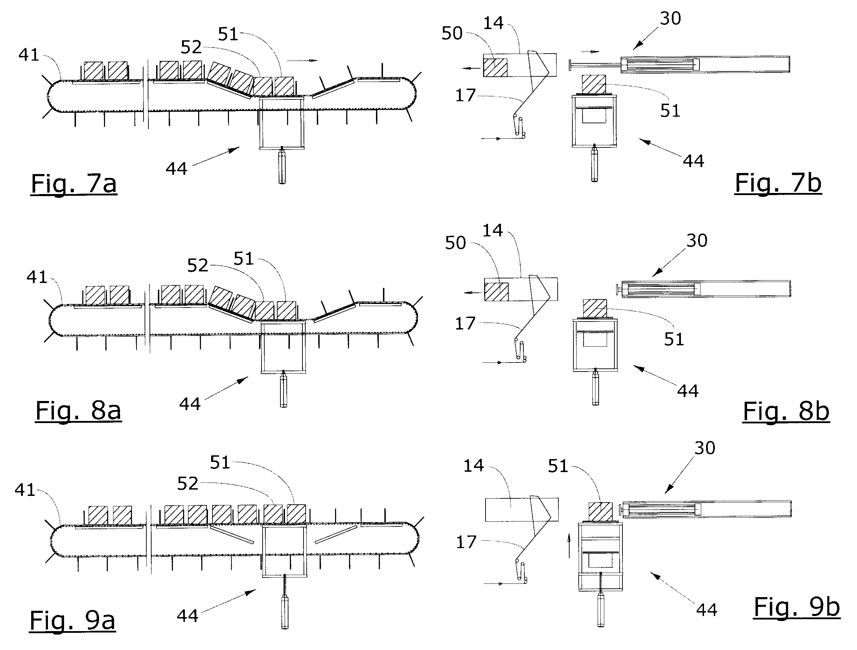

With reference to figures 5a and 5b, the piston 30 pushes the group 50 inside the forming tube 14; in the meantime, the conveyor is temporarily at a standstill, until the group 50 has left the surface of the belt 41.

In the position illustrated in figures 6a and 6b the raising and lowering device 44 has been activated, and the conveyor belt is temporarily lowered to allow the dividers 43 (see fig. 3) to pass below the shaft of the piston 30; in the meantime, infeed of the group 50 inside the forming tube 14 continues, and the film 17 is wound round the forming tube 14 to prepare the pack.

At the same time the sealing block is activated to carry out the longitudinal heat seal 18 of the film 17.

In the position shown in figures 7a and 7b the conveyor belt starts to move again and the group 51 moves forward until it is above the carriage of the raising and lowering device 44, which is still in the lowered position.

The group 50 reaches the end of the forming tube 14, and the piston 30 starts to withdraw.

In figures 8a and 8b the piston 30 is fully withdrawn, and the area above the group 51 is completely free.

At this point (figs. 9a and 9b), the device 44 is activated once again, and the group 51 is aligned with the infeed end of the forming tube.

From here on, the cycle is repeated starting from figs. 4a and 4b.

The invention as described above refers to one particularly advantageous embodiment, in which the machine is designed to carry out an intermittent and low speed packaging cycle, privileging the quality of the work rather than the speed.

From the above description it can be seen that the multipack type packaging machine as per this invention is able to compress, both in width and in height, a series of prepackaged packs in such a way as to obtain a pack with reduced overall dimensions, in the shape of a small trunk, which can then be packed in large numbers in shipping cartons and which, moreover, can be stacked again in large numbers on the shelves of retail outlets.

As mentioned above, the packaging machine as per this invention is particularly suitable for the packaging of crumbly type foodstuffs, such as potato crisps, biscuits or snacks: in fact, thanks to the measures adopted for the longitudinal seal of the pack and for its transfer, the products inside the pack are only subjected to a slight pushing action by the piston, without coming into contact with other mechanical parts that could damage the products.

Another embodiment is foreseen according to which the piston merely acts as a rear support for the products, which are positioned on a conveyor belt that extends inside the forming tube.

It is also evident that the invention includes numerous other variations that come within the aims of the invention, within the framework of mechanical equivalents.

## Claims

1. A multipack type packaging machine (10), designed to produce flexible film packs around groups of products (50, 51, 52) arranged in an orderly fashion on a surface, the said machine comprising a forming tube (14) inside which the said groups of products transit, and around which a flexible film (17) is wound to form a pack around a group of products, first means (15, 16) to unwind the said flexible film (17) and wind it around the said forming tube (14), second means (18) to carry out a longitudinal seal of the edges of the said flexible film (17), third means (20, 21) to transfer the pack being formed towards a transverse sealing and cutting unit (19) to form the ends of the pack and separate two adjacent packs one from the other, characterised in that said second means (18) for carrying out the longitudinal seal of the flexible film (17) are positioned above the surface of the said forming tube (14) in such a way that they do not exercise any mechanical or thermal action on the products which are inside the forming tube (14), in that said third means (20, 21) for the transfer of the pack being formed are positioned near the end of the forming tube (14) and work in association with the walls of the latter to transfer the film (17) towards the said sealing unit without exercising any mechanical action on the products contained inside the forming tube (14), and in that the machine also comprises a conveyor (22) designed to carry away the newly formed pack, the loading end of the said conveyor (2) being close to and downstream of the said transverse sealing and cutting unit (19).

2. A machine (10) according to claim 1, characterised in that it comprises a device (30) for the transfer of the groups of products (50, 51, 52) inside the said forming tube (14).

3. A machine (10) according to claim 2, characterised in that the said transfer device(30) comprises a piston (31) moving between two predetermined positions.

4. A machine (10) according to claim 2 or 3, characterised in that the said transfer device comprises a conveyor which extends inside the said forming tube (14).

5. A machine (10) according to one of the previous claims, characterised in that it comprises a unit (40) for transfer of the products (50, 51, 52) aligned with the entry end of the said forming tube (14).

6. A machine (10) according to claim 5, characterised in that the said transfer unit (40) comprises a conveyor belt (41) on the surface of which are transverse dividers (43) for positioning the groups of products (50, 51, 52).

7. A machine according to claim 6, characterised in that the said conveyor belt (41) is equipped with a device (44) for raising and lowering the surface of the belt itself, the said raising and lowering device comprising a carriage (45) moving on vertical guides (46) and positioned in correspondence with the area of product entry into the forming tube (14).
